# DEMANDE DE BREVET EUROPEEN

(11) **EP 2 224 145 A1**
(43) Date de publication de la demande: **01.09.2010**
(21) Numéro de dépôt: 09360015.3
(22) Date de dépôt: 25.02.2009
(51) Int. Cl.: F16C 23/02, F16C 33/10, C23C 2/00, F16C 13/02, F16C 17/03, F16C 25/04, F16C 33/66

(54) **Palier à contact glissant pour rouleau immergé dans un bain de métal en fusion**

(71) Demandeur: Mourer, Guy, 67720 Weyersheim (FR)
(72) Inventeur: Mourer, Guy, 67720 Weyersheim (FR)

(57) **Abrégé**

Dispositif de palier de rouleaux immergés dans des bains de métaux en fusion améliorant la durée de vie des rouleaux immergés et facilitant la maintenance de l'outil de production.
Il est constitué par une bague externe (2), frettée sur une douille (3) présentant des logements ouverts (8) dans lesquels sont disposés des cylindres pleins (5) uniformément répartis sur le pourtour interne de la douille (3), de repères de contact (6) des cylindres (5) avec l'embout du rouleau (7), et d'une bague d'arrêt (4).
Le guidage en rotation des rouleaux est réalisé sur une zone de contact constituée par deux cylindres (5) consécutifs situés de part et d'autre d'un repère de contact (6).
En cas d'usure de la zone de contact, la douille (3) et les cylindres (5) peuvent être tournés sur eux-mêmes pour présenter une nouvelle zone de contact.
L'invention est particulièrement destinée à l'industrie de galvanisation.

## Description

La présente invention concerne une amélioration des dispositifs de roulement utilisés sur une installation de traitement de produit en bande passant sur un rouleau immergé dans un bain de traitement, tel qu'un métal liquide en fusion ou un liquide agressif et s'applique plus spécialement à une ligne de galvanisation par immersion d'une bande métallique dans un bain à base de zinc liquide en fusion.

Dans une ligne de galvanisation, on fait passer la bande de tôle en acier à galvaniser dans un bain à base de zinc liquide en fusion à 460 ° C en la faisant passer sur au moins un rouleau immergé dans le bain de traitement.

Actuellement, les rouleaux immergés sont montés entre deux bras supports parallèles et tournent dans des paliers fixes positionnés dans des boîtards. Les embouts des rouleaux immergés sont centrés dans le dispositif de roulement et tournent librement, le déplacement latéral étant limité par des arrêts latéraux. Les dispositifs de roulement comportent ou non des éléments roulants placés entre une bague et une douille et déterminés de façon à constituer dans des conditions de fonctionnement une bague de serrage.

Or, l'immersion des dispositifs de roulement dans des bains de traitement, et au cas particulier du zinc liquide est relativement agressive et corrosive pour le matériel immergé.

Dans de telles conditions de fonctionnement, une usure irrégulière des dispositifs de roulement va se produire, augmenter la portance des supports de paliers dans la bague de serrage et générer des vibrations pouvant être de grandes amplitudes qui vont entraîner de fortes variations dans les épaisseurs de dépôt de zinc sur la bande métallique.

De plus, ces inconvénients entraînent des opérations d'entretien et de maintenance relativement fréquentes et difficiles pour remplacer les dispositifs de roulement et remettre en état les rouleaux immergés dans les bains de zinc liquide.

De plus encore, le coût des matériaux utilisés pour les dispositifs de roulement à base de nickel-chrome est souvent très onéreux.

Diverses solutions existent déjà. Par exemple, équiper les rouleaux de roulements complets avec une cage à galets pleins et à jeu partiel (Ex : EP 0 610 167). Dans d'autres applications, les paliers de support du rouleau sont des paliers à roulements comportant une pluralité d'éléments de roulements interposés entre une bague interne et une bague externe et répartis régulièrement autour de l'axe de rotation des rouleaux (Ex : FR 2 735 499). Le guidage en rotation des rouleaux peut aussi être réalisé simplement entre deux bagues de matière différente, ce qui est très onéreux et difficile à remplacer.

De telles réalisations peuvent améliorer la stabilité du rouleau et diminuer dans un premier temps les vibrations jusqu'à ce que le dispositif s'use, et provoque de la non qualité. Elles renchérissent de beaucoup le coût et les difficultés d'entretien et de maintenance du matériel immergé.

La présente invention a pour but de palier à ces inconvénients en créant un équipement pour rouleaux immergés dans des bains de zinc liquide permettant, notamment, d'obtenir une usure régulière des éléments roulants et par voie de conséquence de réduire, voire d'éliminer les vibrations des bandes de tôles métalliques passant dans le bain de traitement, et donc d'obtenir un dépôt de zinc harmonieux et homogène sur la surface de la tôle.

Un autre but est de réduire substantiellement les coûts d'entretien des dispositifs de roulement et des rouleaux.

Un autre but encore est de faciliter les opérations de montage, d'entretien et de maintenance des dispositifs de roulement et des rouleaux immergés.

Suivant l'invention, le dispositif de roulement rapporté à chaque extrémité de bras support se compose d'une bague externe, frettée sur une douille présentant au moins six logements ouverts dans lesquels sont disposés des cylindres pleins uniformément répartis sur le pourtour interne de la douille, d'au moins trois repères de contact des cylindres pleins avec l'embout du rouleau, et d'une bague d'arrêt, en particulier soudée sur la douille.

Le guidage en rotation des rouleaux est réalisé sur une zone de contact constituée par au moins deux cylindres pleins consécutifs situés de part et d'autre d'au moins un repère de contact. Ainsi, en particulier, seuls deux cylindres pleins situés de part et d'autre d'un repère de contact sont en relation avec l'embout du rouleau lors de la traction de la bande de tôle en conditions de fonctionnement et à température d'utilisation.

Lorsque la zone de contact présente un certain taux d'usure, la douille est tournée sur elle-même jusqu'à la zone de contact suivante et simultanément, les cylindres pleins de la zone de contact sont tournés sur eux-mêmes pour présenter une zone de contact neuve.

Le diamètre limité par les cylindres pleins opposés est supérieur au diamètre de l'embout du rouleau d'au moins une distance correspondant à un jeu minimum. Aussi, la rotation de la douille et des cylindres pleins sur eux-mêmes, permet de conserver un jeu minimum entre les cylindres et l'embout du rouleau.

Un repère de contact est disposé au milieu de la distance séparant deux cylindres consécutifs. Les repères de contact peuvent être constitués par des perçages ou des encoches ou bien tout autre dispositif. En particulier, les repères de contact sont constitués par des perçages.

Le montage se fait avec un serrage minimum des cylindres dans la douille et un serrage minimum de la douille par rapport à la bague externe, et un serrage minimum entre la bague externe et le support de bras.

Le blocage des différents éléments du dispositif en conditions de fonctionnement et de température d'utilisation, est réalisé par l'effet de la dilatation différentielle des matériaux utilisés. La lubrification du dispositif est assurée par le liquide de traitement.

Le liquide de traitement est dans notre exemple du zinc liquide.

Cependant, l'invention peut aussi trouver d'autres applications, en particulier dans toutes les conditions de fonctionnement en milieu corrosif à température relativement élevée, par exemple supérieure à 450 ° C.

Divers avantages et caractéristiques de l'invention ressortiront de la description suivante donnée à titre d'exemple et sans aucun caractère limitatif, sur la base des dessins annexés, sur lesquels :
La figure 1 représente une vue en coupe axiale
La figure 2 représente une vue en coupe axiale de l'invention après rotation de la douille et des cylindres lors d'une opération de maintenance
La figure 3 représente en coupe transversale l'invention.

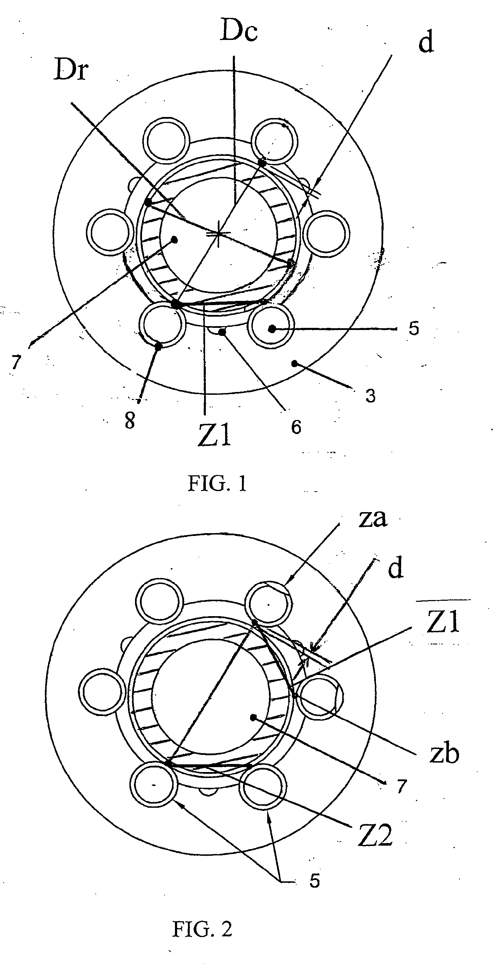

En référence à la figure 1, le dispositif comporte une douille (3) présentant six logements (8) dans lesquels sont disposés six cylindres pleins (5) et de trois repères de contact (6) uniformément répartis sur le pourtour de la douille (3).

Le guidage en rotation des rouleaux est réalisé sur une zone de contact (Z1) constituée par au moins deux cylindres pleins (5) consécutifs situés de part et d'autre d'au moins un repère de contact (6). Ainsi, en particulier, deux cylindres pleins (5) situés de part et d'autre d'un repère de contact (6) sont en relation avec l'embout du rouleau (7) lors de la traction de la bande de tôle en conditions de fonctionnement et à température d'utilisation. Le diamètre (Dc) limité par les cylindres pleins (5) opposés est supérieur au diamètre (Dr) de l'embout du rouleau (7) d'au moins une distance (d) correspondant à un jeu minimum.

En référence à la figure 2, lorsque la zone de contact (Z1) présente un certain taux d'usure (za), la douille (3) est tournée sur elle-même jusqu'à la zone de contact suivante (Z2) et simultanément, les cylindres pleins (5) de la zone de contact (Z1) sont tournés sur eux-mêmes pour présenter une zone de contact neuve (zb).

Aussi, la rotation de la douille (3) et des cylindres pleins (5) sur eux-mêmes, permet de conserver un jeu minimum (d) entre les cylindres (5) et l'embout du rouleau (7). Dans notre exemple, la douille (3) comporte six cylindres pleins (5), et il est alors possible d'augmenter trois fois la durée d'utilisation du dispositif de roulement sans démontage en tournant d'un tiers chaque fois la douille (3) pour se positionner face à un autre repère de contact (6) matérialisant une zone de contact (Z2) constituée par deux cylindres consécutifs (5) suivants et l'embout du rouleau (7).

Le remplacement du matériel immergé n'intervient qu'une fois que tous les cylindres (5) sont usés, en particulier les six cylindres pleins (5), ce qui permet d'espacer et de réduire considérablement les coûts des opérations de maintenance.

Un repère de contact (6) est disposé au milieu de la distance séparant deux cylindres pleins (5) consécutifs. Les repères de contact (6) peuvent être constitués par des perçages ou des encoches ou bien tout autre dispositif. En particulier, les repères de contact (6) sont constitués par des perçages, ce qui facilitent les phénomènes de dilatation des matériaux survenant dans les conditions de fonctionnement. du dispositif.

L'axe de contact est matérialisé sur le support de bras (1) pour permettre de réaliser l'alignement des repères de contact du support de bras (1) et de la douille (3).

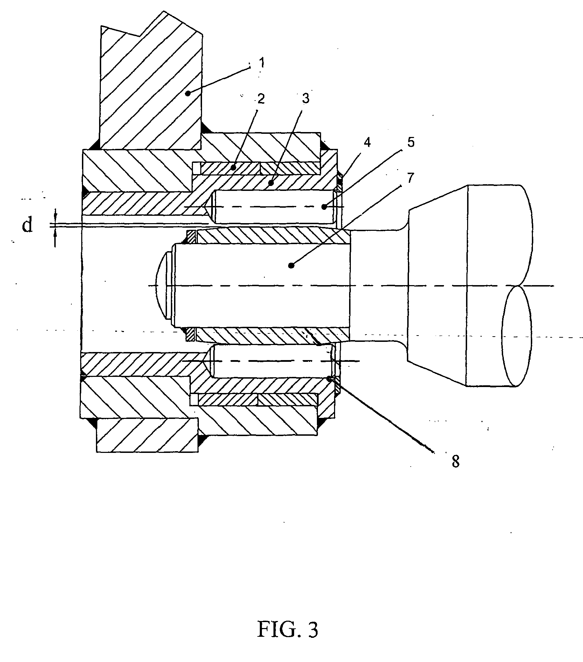

En référence à la figure 3, le dispositif de roulement rapporté à chaque extrémité du bras support (1) se compose d'une bague externe (2), frettée sur une douille (3) présentant au moins six logements (8) ouverts dans lesquels sont disposés des cylindres pleins (5) et d'une bague d'arrêt (4) soudée sur la douille (3). Dans notre exemple, la douille (3) comporte six cylindres pleins (5). Les cylindres pleins (5) sont placés dans des logements ouverts (8) vers l'intérieur de la douille (3) et alésés dans la douille (3), uniformément répartis sur le pourtour interne de la douille (3). Avantageusement, les matériaux des éléments constitutifs du dispositif sont déterminés de façon à obtenir, dans les conditions de fonctionnement et à température d'utilisation, un autoblocage de la bague externe (2) du dispositif de roulement sur le boîtard du bras (1) et le blocage des cylindres (5) dans la douille (3).

Le montage se fait avec un serrage minimum des cylindres pleins (5) dans la douille (3) et un serrage minimum de la douille (3) par rapport à la bague externe (2), et un serrage minimum entre la bague externe (2) et le support de bras (1).

Dans notre exemple, le montage se fait avec un serrage à température ambiante des cylindres (5) dans la douille (3) pour avoir à peu près 2/100 e de serrage à 460 ° C et un serrage de 2/100 e de la douille (3) par rapport à la bague externe (2) et un serrage de 2/100 entre 1a bague externe (2) et le support de bras (1).

La lubrification du dispositif de roulement est constituée par le bain de traitement à base de zinc liquide. C'est la traction de la bande de tôle métallique qui assure la relation entre les cylindres pleins consécutifs (5) formant la zone de contact (Z) et l'embout du rouleau (7).

La dilatation différentielle des matériaux utilisés permet que les différents éléments du dispositif sont bloqués à température d'utilisation et comporte un serrage minimum à température ambiante.

En effet, le dispositif de roulement suivant l'invention est de préférence trimétallique, tels que en particulier :
- la bague externe est en acier traité, avantageusement en acier trempé ce qui doit faciliter le démontage du dispositif en cas de remplacement du matériel immergé
- la douille est en acier inoxydable hypertrempé, avantageusement en inox 316 L, extrêmement résistant à la corrosion du zinc liquide
- les cylindres pleins sont en acier nitruré, avantageusement en acier rapide nitruré

Les dimensions du dispositif seront fonction de la taille des éléments de bras du rouleau et du diamètre des embouts de rouleaux.

La présente invention permet ainsi d'espacer les opérations de remplacement des matériels immergés dans les bains de zinc liquide, de diminuer les coûts de la maintenance et réduit considérablement les vibrations sur la bande de tôle qui nuisent à l'application homogène et de qualité de la couche de zinc.

Le dispositif de roulement peut être utilisé dans des bains d'autres métaux en fusion ou environnements liquides à température élevée.

## Revendications

1. Dispositif de roulement de rouleaux immergés dans des bains de métaux en fusion **caractérisé en ce qu'**il se compose d'une bague externe (2), frettée sur une douille (3) présentant au moins six logements ouverts (8) dans lesquels sont disposés des cylindres pleins (5) uniformément répartis sur le pourtour interne de la douille (3), d'au moins trois repères de contact (6) des cylindres pleins (5) avec l'embout du rouleau (7), et d'une bague d'arrêt (4)

2. Dispositif selon la revendication 1 **caractérisé en ce que** le guidage en rotation des rouleaux est réalisé sur une zone de contact (Z1) constituée par au moins deux cylindres pleins consécutifs (5) situés de part et d'autre d'au moins un repère de contact (6)

3. Dispositif selon les revendications 1 et 2 **caractérisé en ce que** la douille (3) peut être tournée sur elle-même pour présenter la zone de contact suivante (Z2)

4. Dispositif selon les revendications 1, 2 ou 3 **caractérisé en ce que** les cylindres pleins (5) présentant une zone de contact usée (za) sont tournés sur eux-mêmes en vue de présenter une nouvelle zone de contact (zb)

5. Dispositif selon les revendications 1 à 4 **caractérisé en ce que** le diamètre (Dc) limité par les cylindres pleins (5) opposés est supérieur au diamètre (Dr) de l'embout du rouleau (7) d'au moins une distance (d) correspondant à un jeu minimum

6. Dispositif selon les revendications de 1 à 5, **caractérisé en ce que** lors de toute manipulation de la douille (3) ou des cylindres pleins (5), le diamètre (Dc) est conservé

7. Dispositif selon les revendications de 1 à 6 **caractérisé en ce que** le repère de contact (6) est disposé au milieu de la distance séparant deux cylindres consécutifs (5)

8. Dispositif selon les revendications de 1 à 7 **caractérisé en ce que** le repère de contact (6) peut être constitué par des perçages ou des encoches, ou bien tout autre dispositif

9. Dispositif selon les revendications de 1 à 8, **caractérisé en ce que** le montage se fait avec un serrage minimum des cylindres (5) dans la douille (3) et un serrage minimum de la douille (3) par rapport à la bague externe (2) et un serrage minimum entre la bague externe (2) et le support de bras (1)

10. Dispositif selon les revendications de 1 à 9, **caractérisé en ce que** le blocage des différents éléments du dispositif en conditions de fonctionnement et de température d'utilisation, est réalisé par l'effet de la dilatation différentielle des matériaux

## Revendications modifiées

### Revendications modifiées conformément à la règle 137(2) CBE.

**1.** Dispositif de palier lisse de rouleaux immergés dans des bains de métaux en fusion **caractérisé en ce qu'**il se compose d'une bague externe (2), frettée sur une douille (3) présentant au moins six logements ouverts (8) dans lesquels sont disposés des cylindres pleins (5) uniformément répartis sur le pourtour interne de la douille (3), d'au moins trois repères de contact (6) des cylindres pleins (5) avec l'embout du rouleau (7), et d'une bague d'arrêt (4)

**2.** Dispositif selon la revendication 1 **caractérisé en ce que** le guidage en rotation des rouleaux est réalisé sur une zone de contact (Z1) constituée par au moins deux cylindres pleins consécutifs (5) situés de part et d'autre d'au moins un repère de contact (6)

**3.** Dispositif selon les revendications 1 et 2 **caractérisé en ce que** la douille (3) peut être tournée sur elle-même pour présenter la zone de contact suivante (Z2)

**4.** Dispositif selon les revendications 1, 2 ou 3 **caractérisé en ce que** les cylindres pleins (5) présentant une zone de contact usée (za) sont tournés sur eux-mêmes en vue de présenter une nouvelle zone de contact (zb)

**5.** Dispositif selon les revendications 1 à 4 **caractérisé en ce que** le diamètre (Dc) limité par les cylindres pleins (5) opposés est supérieur au diamètre (Dr) de l'embout du rouleau (7) d'au moins une distance (d) correspondant à un jeu minimum

**6.** Dispositif selon les revendications de 1 à 5, **caractérisé en ce que** lors de toute manipulation de la douille (3) ou des cylindres pleins (5), le diamètre (Dc) est conservé

**7.** Dispositif selon les revendications de 1 à 6 **caractérisé en ce que** le repère de contact (6) est disposé au milieu de la distance séparant deux cylindres consécutifs (5)

**8.** Dispositif selon les revendications de 1 à 7 **caractérisé en ce que** le repère de contact (6) peut être constitué par des perçages ou des encoches, ou bien tout autre dispositif

**9.** Dispositif selon les revendications de 1 à 8, **caractérisé en ce que** le montage se fait avec un serrage minimum des cylindres (5) dans la douille (3) et un serrage minimum de la douille (3) par rapport à la bague externe (2) et un serrage minimum entre la bague externe (2) et le support de bras (1)

**10.** Dispositif selon les revendications de 1 à 9, **caractérisé en ce que** le blocage des différents éléments du dispositif en conditions de fonctionnement et de température d'utilisation, est réalisé par l'effet de la dilatation différentielle des matériaux.
